(19) Europäisches Patentamt / European Patent Office / Office européen des brevets

(11) **EP 2 907 384 B1**

(12) **EUROPEAN PATENT SPECIFICATION**

(45) Date of publication and mention
of the grant of the patent:
**08.05.2019   Bulletin 2019/19**

(51) Int Cl.:
***A01K 97/12*** *(2006.01)*

(21) Application number: **15154578.7**

(22) Date of filing: **10.02.2015**

(54) **Bite detector**

Bissdetektor

Détecteur de touche

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.02.2014   GB 201402574**

(43) Date of publication of application:
**19.08.2015   Bulletin 2015/34**

(73) Proprietor: **Delkim Products Limited
Bedford, MK43 7DZ (GB)**

(72) Inventor: **Romang, Derek
Bedford, Bedfordshire MK43 7AR (GB)**

(74) Representative: **Harrison IP Limited
3 Ebor House
Millfield Lane
Nether Poppleton, York YO26 6QY (GB)**

(56) References cited:
**WO-A1-2004/021777      GB-A- 2 340 016
GB-A- 2 499 420      US-A- 5 125 181**

**Description**

Field of the invention

The present invention relates to a bite detector for use by anglers.

Background of the invention

Bite detectors monitor fishing lines, and alert an angler with visual and/or audio alarms if any significant movement is detected in the line. Power consumption is very important for bite detectors, as fishing sites tend to be remote sites without access to external power sources, and bite detectors are required to be light and portable, and thus rely on relatively small batteries.

GB 2 222 060 is an example of a bite detector which uses a piezoelectric element to detect movements in a fishing line.

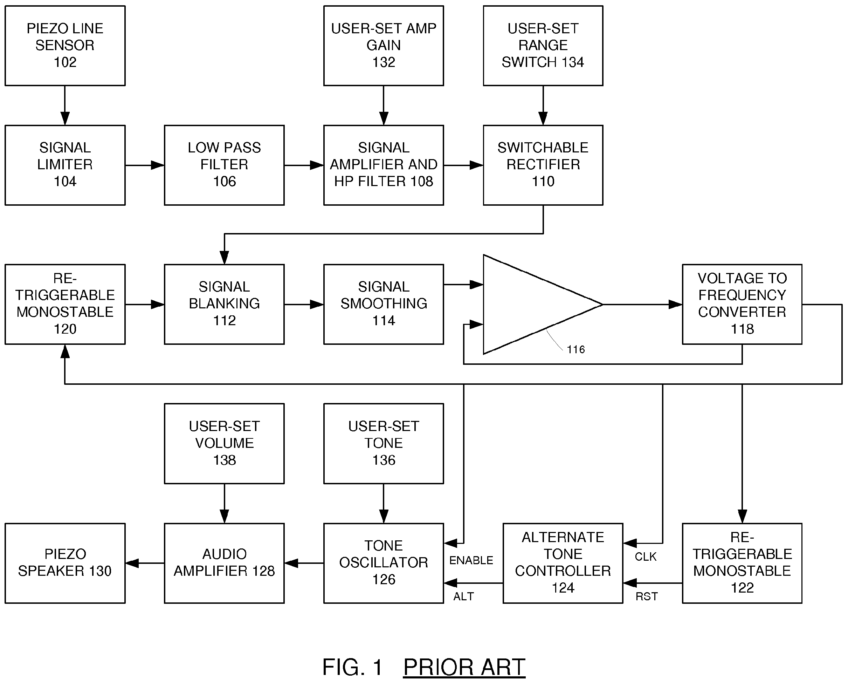

Figure 1 is a schematic block diagram of a more advanced prior art bite detector in which, as before, a piezoelectric line sensor 102 is used to monitor movements in a fishing line. The induced voltage from the sensor 102 passes through a signal limiter 104 and a low pass filter 106, and is then amplified and high-pass filtered by the amplifier module 108 with a gain set by a user-set dial 132. The signal is rectified by switchable rectifier 110 (with use-set range switch 134), and passes through a signal blanking circuit 112 (controlled by a monostable 120), a signal smoothing circuit 114 (typically a simple RC filter), and a ground offset amplifier 116, before being fed into an analogue voltage to frequency ('v to f') converter integrated circuit 118. The offset signal holds the v to f converter output low until it is active, and the v to f converter is configured such that it produces an output signal in the range of approximately 1 to 40 Hz over the entire input signal range. The v to f output signal drives LEDs (not shown) and an audio output chain comprising a retriggerable monostable 122, an alternate tone controller 124, tone oscillator 126 (with user-set tone 136), audio amplifier 128 (with user-set volume 138) and a piezoelectric loudspeaker 130.

While it is theoretically possible to replace some or all of the modules of Figure 1 with a software implementation running on a microprocessor (as may conventionally be done in other fields of technology), this would not be desirable for a bite detector, because even relatively low power processor designs draw significantly more current than the analogue circuitry of the bite detector of Figure 1, to the extent that the battery life would be unacceptably degraded.

It would nevertheless be desirable to provide more flexible user control of a bite detector.

Furthermore, though the bite detector of Figure 1 provides some protection against false positive alarms caused by knocks, footsteps and other essentially transient noises, the amount of protection is essentially hard-coded into the circuit and cannot easily be adjusted.

GB 2 340 016 discloses a vibration detector for a fishing line including a vibration transducer and a pulse generator connected to the transducer which produces a series of electrical pulses in relation to the output of the vibration transducer. A counter is connected to receive the series of electrical pulses from the pulse generator and produce an indicator signal in the event that it receives a given number of pulses within a given period of time.

The present invention addresses these and other problems in the prior art.

Summary of the invention

In a first aspect of the invention, there is provided a bite detector for providing an alarm signal indicative of movement of the line of a fishing rod, the detector comprising the technical features of independent claim 1. Preferred embodiments are set out in the dependent claims.

In a second aspect of the invention, there is provided a computer program code comprising the features of independent claim 14.

By providing a range of lengths of time, which may be user-selectable at least in part, the bite detector can provide more flexibility and adaptability to different operating conditions. For example, if it is raining or hailing, it may be desirable temporarily and instantaneously to increase the length of time before an alarm signal is generated (because of the large amount of false positive alarms caused by the precipitation).

The movement may correspond to a continuous movement (a net displacement) or a vibration (substantially zero net displacement). The continuous movement and vibration typically produce a similar signal but may alternatively produce a different signal (having a different waveform shape, size, or time scaling, and so on, or any appropriate combination of these factors), depending for example on the type of line sensor that is used. The bite detector may include a discriminator module for processing the movement signal to discriminate between continuous movement and vibration (or particular modes of vibration and/or movement). The vibration may be a backwards and forwards movement of the line, or transverse to the line direction. By appropriate choice and configuration of sensor(s) and processing of the movement signal, the bite detector may discriminate between different modes of vibration and/or movement, for example taking into account the type and thickness of the fishing line (by appropriate sensing, deduction or user input, for example). By incorporating any of the above features, the bite detector may be adapted to detect vibrations but not continuous movement, or vice versa. A vibration may be defined, for example, by the ratio of distance travelled by the fishing line to net displacement of the fishing line, whereby vibration may be defined as the above ratio being above a threshold (such as 2, 3, 4, 5, 7, 10, 20, 30, 50, 100, 250, 500, and so on), which may be selectable, for example by a user and/or in accordance with the prevailing conditions. The distance travelled by the line may be computed for example by summing the magnitude of successive (or other) differences detected in the extension of the fishing line. Alternatively or additionally vibration may be defined by the rate of movement of the fishing line, for example being above a particular velocity. The movement and/or extension of the fishing line may be measured or deduced by any appropriate means, such as a spool rotation detector, rotation detector on a roller in contact with the fishing line, optical detector operating directly on the fishing line, magnetic detector, inertial detector, piezoelectric detector (most preferably), and so on.

The signal discrimination module includes, according to the invention, a first stage, for determining if the movement signal has met at least one first criterion for a first length of time, and a second stage, for determining if the movement signal has met at least one second criterion a second length of time consecutive to the first length of time.

The bite detector may include a processor for executing computer program code, and the first stage of the discriminator module is operable to activate the processor if the movement signal has met said at least one first criterion for a first length of time. Thus, power consumption caused by the processor can be reduced.

The first stage is preferably implemented substantially or solely in hardware (that is, implemented by analogue circuitry, preferably including an analogue comparator), and/or without the use of any dedicated computer program code. The second stage of the signal discrimination module preferably comprises discriminator computer program code which, when executed by the processor, evaluates whether said at least one second criterion is met for the second length of time.

Thus the flexibility of software can be combined with the low power consumption characteristics of analogue components.

The discriminator computer program code may cause the processor to enter a sleep mode for at least part of the second length of time.

Preferably the alarm module includes alarm computer program code executable on the processor, and the second stage of the signal discrimination module causes execution of the alarm computer program code if said at least one second criterion is met for the second length of time.

The first length of time is typically substantially fixed during operation of the bite detector. Such a time period is in general difficult to modify in hardware, especially during operation, or at least without making consequential and undesirable alterations to other properties of the circuit. Conversely, the second length of time is preferably adjustable during operation of the bite detector. This is more easy to achieve under software control, and provides the required flexibility overall.

Preferably said at least one first criterion is whether the movement signal exceeds a first threshold for the first length of time, and said at least one second criterion is whether the movement signal exceeds a second threshold for the second length of time. The first and second threshold may be substantially the same, for example a reference voltage $v_{REF}$ or similar.

As explained in more detail below, the signal discriminator module preferably further comprises a preferably analogue comparator (ideally in the first stage as aforesaid), and preferably further comprises a preferably analogue signal delay module (again ideally in the first stage as aforesaid) for delaying the input to the comparator.

Implementation of the present invention involves performing or completing certain selected tasks or stages manually, automatically, or a combination thereof. Moreover, according to actual instrumentation and equipment of preferred embodiments of the present invention, several selected stages could be implemented by hardware or by software on any operating system of any firmware or a combination thereof. For example, as hardware, selected stages of the invention could be implemented as a chip or a circuit. As software, selected stages of the invention could be implemented as a plurality of software instructions being executed by a computer using any suitable operating system. In any case, selected stages of the invention could be described as being performed by a data processor, such as a computing platform for executing a plurality of instructions.

Although various embodiments of the present invention have been described separately above, any of the features of the present invention can be used in conjunction with any other embodiment or feature where appropriate. For example apparatus features may where appropriate be interchanged with method features. References to single entities should, where appropriate, be considered generally applicable to multiple entities and vice versa. Unless otherwise stated herein, no feature described herein should be considered to be incompatible with any other, unless such a combination is clearly and inherently incompatible. Accordingly, it should generally be envisaged that each and every separate feature disclosed in the introduction, description and drawings is combinable in any appropriate way with any other unless (as noted above) explicitly or clearly incompatible.

Brief description of the drawings

The invention will now be described further, by way of example, with reference to the accompanying drawings, in which:

    Figure 1 is a schematic block diagram of an prior art bite detector;
    Figures 2A and 2B are an illustration of a bite detector in accordance with the present invention;
    Figure 3 is a schematic of the operation of the bite detector of Figures 2A and 2B;
    Figure 4 is a schematic block diagram of the above-mentioned bite detector;
    Figure 5 is a graph illustrating the variation of a typical input signal over time for the above-mentioned bite detector;
    Figure 6 is a graph illustrating the frequency content of a typical input signal for the above-mentioned bite detector;
    Figure 7 is a timing diagram illustrating the operation of the above-mentioned bite detector;
    Figure 8 is a graph illustrating typical voltage-to-frequency transfer functions for the above-mentioned bite detector;
    Figure 9 is a graph illustrating the variation of mark-to-space ratios with repetition frequency for the above-mentioned bite detector;
    Figure 10 is a schematic overview of a first particular embodiment of the bite detector relating to timing parameter prediction; and
    Figure 11 is a schematic overview of a second particular embodiment of the bite detector relating to signal discrimination.

Detailed description of the preferred embodiment(s)

With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

The embodiments described below relate to a bite detector for use by anglers.

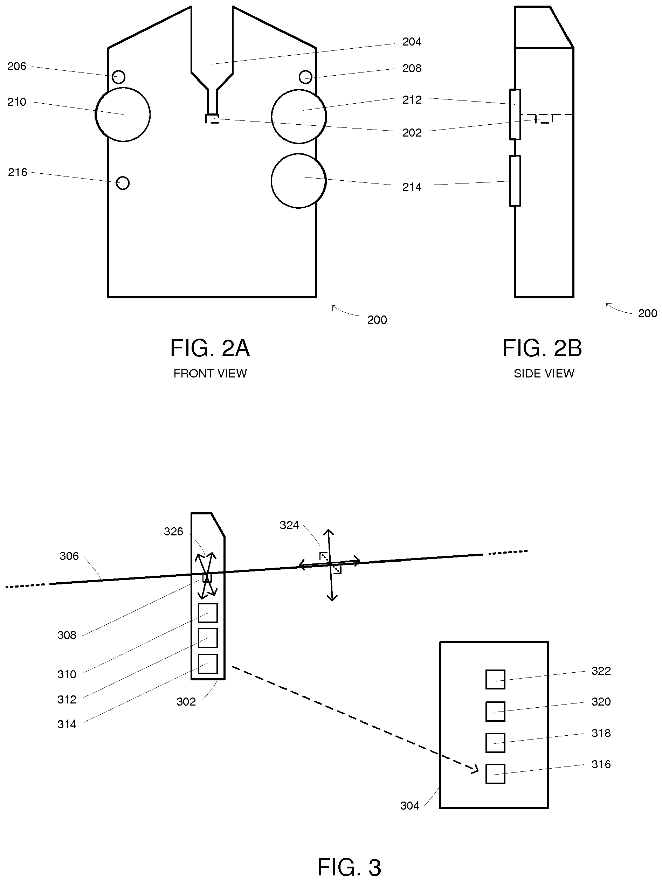

Figures 2A and 2B are an illustration of a bite detector. The bite detector 200 has a piezoelectric sensor 202 located at the bottom of a notch 204, for seating a fishing line of interest. Indicator LEDs 206, 208 and a loudspeaker (not shown) are provided to indicate that movement has been detected in the fishing line. The manner in which the LEDs and loudspeaker are controlled is discussed below. User-selectable dials 210, 212, 214 are provided to allow user setting of the sensitivity 210, volume 212 and tone 214 of the device. A further button 216 allows the range of the device to be varied, as described below. Various outputs (not shown) are also provided on the bottom of the device to allow the functionality of the bite detector to be enhanced.

Figure 3 shows the above-mentioned bite detector of Figures 2A and 2B in use. The bite detector 302 is shown in conjunction with an optional wireless device 304, and the fishing line 306 which is seated in the aforementioned notch and in contact with the piezoelectric sensor 308. A control unit 310, loudspeaker 312 and wireless transmitter 314 are shown in schematic form within the bite detector 302. The wireless unit includes (in schematic form) a wireless receiver 316, a control unit 318, a loudspeaker 320 and optional LEDs 322, mirroring the outputs of the bite detector 302 and thus allowing the bite detector to be monitored remotely. The transmitter 314 and receiver 316 may in one embodiment be capable of bi-directional communication, so as to allow remote control of the bite detector, for example to adjust the sensitivity, as well as remote monitoring. In use, essentially any movement 324 of the fishing line (including vibrations not resulting in a net displacement of the line) causes stick-slip vibrations 326 at the piezoelectric sensor 308, inducing a voltage approximately in the 1.4 kHz range. Detection of this characteristic signal allows the bite detector to determine that the line is moving.

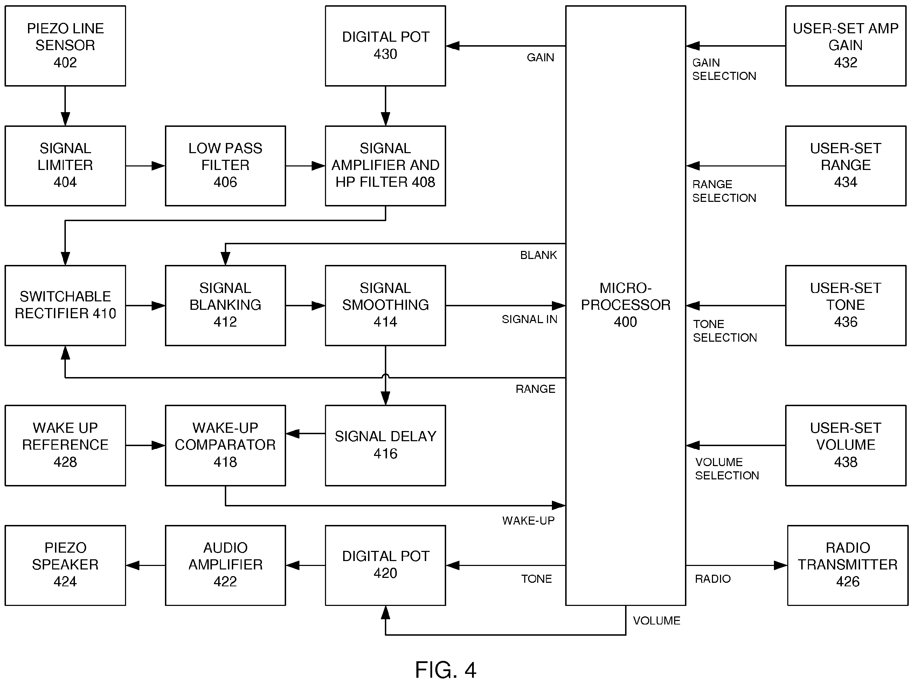

Figure 4 is a schematic block diagram of the above-mentioned bite detector, centred around a processor unit 400.

In overview, the bite detector implements a conventional analogue voltage to frequency converter ('v to f converter') in computer program code executed with a model of a v to f converter implemented by computer program code executing on the processor. The model of the v to f converter, in conjunction with a mark-to-space ratio function (see later), is used to predict pulse periods/frequencies and durations, allowing audio tones to be reconstructed remotely by the above-mentioned wireless device. In addition, the particular configuration of features in hardware and in software allows a variable 'knock resist' and greater flexibility of configuration and audio output to be provided while minimising power consumption (certainly relative to a more complete software implementation).

In more detail, the signal from the aforementioned piezoelectric line sensor 402 passes through a signal limiter 404 and a low pass filter 406, and is then amplified and high-pass filtered by the amplifier module 408 with a gain set by digital potentiometer 430 under the control of the processor 400. The signal is rectified by rectifier 410, and passes through a signal blanking circuit 412, and a signal smoothing circuit 414 (typically a simple RC filter). At this point the signal is sampled with an A-to-D converter (not shown) and provided to the processor 400. The smoothed signal is also then passed through a signal delay unit 416 (which is typically implemented using an integrating RC circuit, preferably biased at an activation threshold voltage $T_{REF}$ to simplify its use), and then is presented to a 'wake-up' comparator 418 which compares the delayed, smoothed signal to a reference value 428. It will be appreciated that the bite detector also includes computer program code storage (not shown) and may include other functions, hardware and software modules, and inputs and outputs not directly related to bite detection.

The smoothed signal output by module 414 is processed by the processor as described in more detail below, and a tone is digitally generated and outputted through the digital potentiometer 420, under the control of the processor, and amplified by module 422 and output by the speaker 424. Optionally a radio transmitter 426 may be provided for use with a remote unit as aforementioned, and a radio transmission system may be provided for example as detailed in GB 2 289 604. As mentioned above, certain user-controlled inputs are provided to the processor 400, including a user-set amplifier gain 432, a user-set range 434, a user-set tone 436 and a user-set volume 438.

The switchable rectifier 410 allows the signal path to be switched between at least two (and typically two) sets of rectifying diodes having different voltage drops (typically a Schottky diode and one general purpose type), allowing the device to be made crudely more or less sensitive, for example to take into account rough water conditions, or heavy rain or hail. An alternating current (AC) input stage was chosen for its low power demands compared to a DC system and because AC input (and amplification) can facilitate frequency discrimination of the sensor data and mitigate the effect of any DC offset of the amplifier.

In the present embodiment all of the input signal from the low pass filter 406 is fed into the signal amplifier 408, which has a variable gain as mentioned above. In an alternative embodiment, which can provide a greater sensitivity range, an attenuator (not shown) is provided between the low pass filter 406 and amplifer 408. The attenuator feeds a variable (controllable) portion of the filter sensor signal into the amplifier 408, which is replaced with a fixed high gain amplifier. This alternative embodiment obviates the need for a switchable rectifier 410, and instead only a single 'high' range rectifier diode 410 can be used. This arrangement can give a wider range of operating sensitivity and can reduce the complexity of the control arrangements.

The voltage to frequency converter implemented by the computer program code executing on the processor may be modelled, for example, on a CD4046 device as used and configured (approximately) in GB 2 222 060.

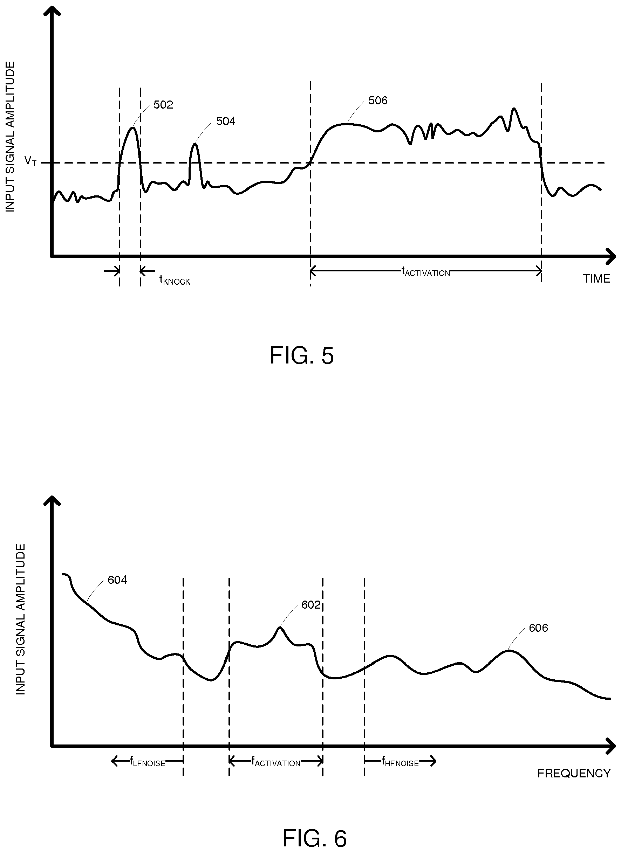

Figure 5 is a graph illustrating the variation of a typical input signal over time for the above-mentioned bite detector. Typically the input signal may be quite noisy for a number of reasons. An increased amplitude can of course be caused by movement of the line relative to the piezoelectric sensor, but voltage spikes can also be caused by other factors. For example, knocking the detector can cause a sharp amplitude spike, as can walking in the vicinity of the detector and/or rod, and rain drops, hail stones and other, essentially transient, events. Typically an activation voltage is selected via the gain and range settings mentioned above. An equivalent input activation threshold voltage $V_T$, taking into account the above factors, is shown in the figure. Knocks and other transient events are recorded as relatively short-duration peaks 502, 504, having a typical duration $t_{KNOCK}$ of approximately 200-300 ms, whereas a genuine activation event (a bite) may have a longer duration $t_{ACTIVATION}$. It is desirable to incorporate a 'knock resist' in order to eliminate false positives caused by such transient events. Further discrimination of signals is possible and in some cases necessary, however, as will now be explained.

Figure 6 is a graph illustrating the frequency content of a typical input signal for the above-mentioned bite detector. As mentioned above, the piezoelectric stylus has a frequency response $f_{ACTIVATION}$ typically centred around 1.3 kHz or so, though the response is quite flat and may not be very clearly defined. Also present in the signal is low frequency noise 604 in lower frequency ranges $f_{LFNOISE}$, which is essentially an omnipresent low rumble. Additionally, high frequency noise 606 is present at higher frequencies $f_{HFNOISE}$. The high frequency noise is typically a mix of sounds originating outside the bite detector, electrical noise, and induced RF noise.

The low-pass filter 406 and high pass filter 408 mentioned above help to isolate the signal of interest, but are not in themselves normally sufficient to allow effective discrimination of the signal.

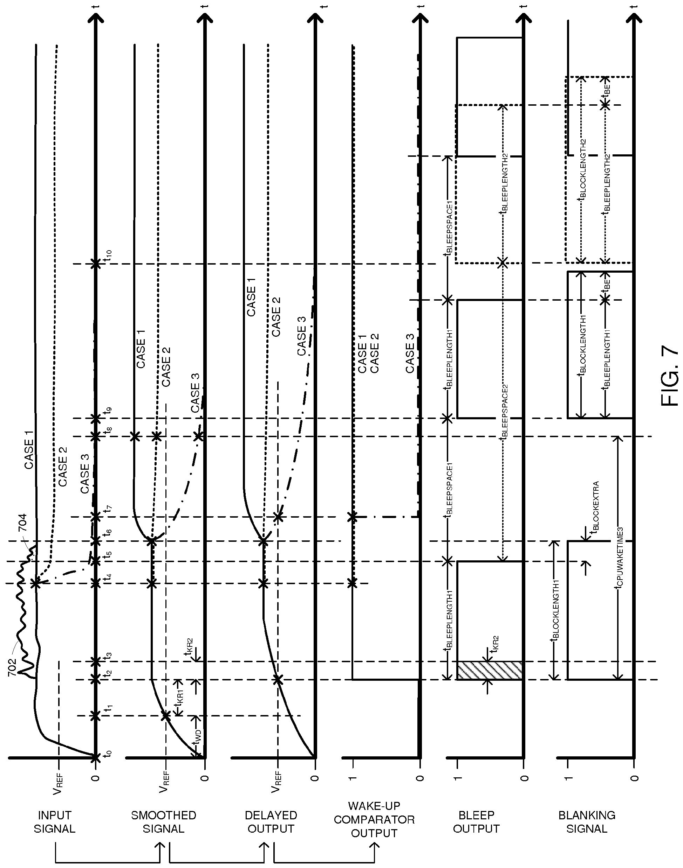

The operation of the bite detector will now be further explained with reference to Figure 7, which is a timing diagram illustrating the operation of the electrical circuits within the bite detector.

A typical input signal is shown, corresponding very approximately to the output of the piezoelectric sensor 402 above, starting from a baseline time $t_0$. A smoothed version of the signal, corresponding very approximately to the output of signal smoothing unit 414 (and provided as a sampled input to the processor) is shown below. Below the smoothed signal is shown the delayed output, corresponding very approximately to the output of the signal delay unit 416. As mentioned above, the delay functionality is normally provided by a simple integrating RC circuit, so the signal in that case may look different and may vary depending on how the circuit is biased and reset, and so on, but the same basic principles apply as will now be described. For ease of understanding, the output from the wake-up comparator 418 is shown in the next graph, and below that is the 'bleep output' representing the presence or absence of a tone output by the processor to the digital pot 420 and audio amplifier 422 mentioned above. Lastly, the blanking signal, as output by the processor to the signal blanking unit 412, is shown.

At time $t_1$, the smoothed signal exceeds a reference voltage signal $V_{REF}$ which has been chosen as a threshold for activation of the bite detector (corresponding, essentially, to the voltage $V_T$ of Figure 6). The effect of the variable voltage drop across the switchable rectifier and the lag of the low pass filtered signal behind the input signal will be ignored for the purpose of this explanation, but their effect can of course be taken into account.

The delayed output signal, by virtue of its inherent delay, doesn't reach $V_{REF}$ (as set by the wake-up reference 428 above) until time $t_2$. At this time the comparator switches state (shown in this case as switching from a logic '0' to a logic '1', though of course it may equally switch from a '1' to a '0', and so on), as shown in the wake-up comparator output' graph, and the processor is woken. From this point onwards, the processor remains active until it puts itself to sleep; if the comparator switches state again, the processor is not automatically deactivated.

The time difference between times $t_2$ and $t_1$ corresponds to the 'knock resist', $t_{KR1}$, mentioned above. The delay circuit is configured substantially such that if the input signal returns below the threshold before the knock resist period $t_{KR1}$ has expired, the delayed version of the signal will not exceed $V_{REF}$, the circuit essentially resets, and the processor will not be woken. Thus, transient events exceeding the threshold activation voltage but not lasting longer than the knock resist time $t_{KR1}$ will not cause the processor to wake. This not only eliminates many false positive alerts, but also conserves a considerable amount of power.

In a course of events without the second knock resist and as depicted in Figure 7, once the processor wakes up, the audio signal is generated (bleep output) and the input signal is blanked via the signal blanking unit 412 of Figure 4 ('blanking signal' graph). The duration of the audio pulse and the delay before the next pulse is determined in dependence on the amplitude of the input signal, as is explained in more detail below.

The length of the bleep is indicated by $t_{BLEEPLENGTH1}$, coming to an end at time $t_5$, and the length of the corresponding signal blanking/blocking pulse is indicated by $t_{BLOCKLENGTH1}$, which is equivalent to $t_{BLEEPLENGTH1}$ plus an additional blocking period $t_{BLOCKEXTRA}$, coming to an end at time $t_6$. While the signal is blanked, the input to the smoothed signal and (consequently) the delayed output signal is sampled and held (there is effectively an open circuit on the input). The reason for this is that the audio signal output by the piezoelectric speaker (represented by a level of 1 in 'bleep signal') causes positive feedback via vibrations in the bite detector casing, which results in an additional signal component 702 superimposed on the input signal. The component 702 can be sufficiently big as to drown out the desired input signal and to cause permanent activation of the bite detector. The extra blanking period $t_{BLOCKEXTRA}$ gives extra time for any resonances 704 in the casing to settle down after the audio output ceases.

By appropriate design of the delay circuit 416 of Figure 4, the knock resist time $t_{KR1}$ may be varied, though precise and dynamic control is difficult. In the present embodiment using a relatively simple delay circuit, the duration of the knock resist depends inversely on the amplitude of the input signal. However, when presented with a substantially constant signal just above the activation threshold, the delay becomes essentially a fixed amount, of the order of 400 ms.

According to the invention, another means is provided for varying and extending the overall knock resist time. At time $t_2$, as the comparator output changes state (in this case from 0 to 1), the processor is woken. To extend the knock resist time, the processor sends itself back to sleep for a duration (typically a fixed unit of time which in one embodiment is 16 ms, and thus $t_{KR2}$ in that case is $n \times 16$ ms, where $n > 0$) . When the processor awakes, it can measure the smoothed signal input and make a decision on whether to sleep for a further unit of time, to proceed to issue an alarm signal, or to deactivate without issuing an alarm signal. In the present embodiment the overall knock resist time $t_{KR}$ in milliseconds is thus given by:

$$t_{KR} = t_{KR1} + t_{KR2} + n \times 16$$

As can be appreciated, a range of knock resist times may therefore be provided in accordance with requirements. In Figure 7, a second knock resist delay is illustrated by the shaded portion of the bleep output graph (representing a delay in initiating the bleep).

Without the second knock resist, the alarm signal (indicated by the bleep output) is initiated essentially instantaneously at time $t_2$ when the processor awakes, after the processor tests to see if the smoothed signal is in the correct range. According to the invention, with a single second knock resist delay $t_{KR2}$ the alarm signal is initiated later, as indicated at time $t_3$. In the present embodiment, the alarm is also indicated by the flashing of the LEDs shown in Figures 2A and 2B, by any appropriate means (such as alternating the LEDs). The formation of the audio tone will be described below.

Time $t_4$ is a point at which a number of different possible input signals diverge. Case 1 (continuous line) envisages a constant, substantially unchanging amplitude signal that may for example correspond to rapid and continuous movement or vibration of the line. Case 2 (dotted line) corresponds approximately to a similar signal as Case 1, but with reduced movement or vibration, albeit still above the detection threshold. Case 3 (dotted and dashed line) represents a rapid decay of the signal, corresponding to the movement or vibration ceasing entirely (or at least passing below the detection threshold). While the input signal is blanked (that is, when the signal in the 'blanking signal' graph is at 1) any change in the input signal is not reflected in the smoothed signal or the delayed signal derived therefrom. Thus it is not until the blanking ends at time $t_6$ that the smoothed signal and delayed signal begin to mirror the input signal (s). Accordingly, at time $t_7$ the delayed version of the Case 3 signal drops below the wake-up threshold $V_{REF}$ and the comparator output reverts to 0 but, as noted above, this does not automatically cause the processor to sleep (this does not happen for Case 3 until time $t_8$, as explained below).

For signal Case 1, an audio pulse length $t_{BLEEPLENGTH1}$ and pulse space $t_{BLEEPSPACE1}$ were chosen based on the amplitude of the input signal, corresponding to a mark/space ratio ($t_{BLEEPLENGTH1}$ / $t_{BLEEPSPACE1}$) and a total pulse period of $t_{BLEEPLENGTH1}$ + $t_{BLEEPSPACE1}$. For Case 1 these values remain unchanged as the input signal remains unchanged (here we ignore, for ease of explanation, initial effects where the smoothed signal may not yet reach its final value until after the first audio pulse, as can be seen to be the case at times $t_2$ and $t_8$, for example). Assuming an unchanging value of the smoothed input signal, the audio pulse continues with a second pulse of width $t_{BLEEPLENGTH1}$ and a subsequent gap of $t_{BLEEPSPACE1}$, and so on.

For signal Case 2, however (again ignoring initial effects while the delayed output finishes mirroring the input signal), the measured smoothed signal decreases, so the bleep length is increased to $t_{BLEEPLENGTH2}$ and the total pulse period is increased to $t_{BLEEPLENGTH2}$ + $t_{BLEEPSPACE2}$.

During the 'space' interval (that is, during $t_{BLEEPSPACEn}$ when the input signal is not blanked and the smoothed signal is thus tracking the input signal), and typically at the very end of the pulse period (shown as time $t_8$), the processor checks the current smoothed input signal and accommodates for any changes in the input signal. For signal Case 3, at time $t_8$ the processor determines that the input signal is below a desired threshold (which may be the same as $V_{REF}$ or otherwise, for example it may be a lower value to provide hysteresis) and decides to cancel the alarm. At that point the processor goes back to sleep, after (in this case) a single audio pulse, and power consumption is reduced again. The time during which the processor is active for signal Case 3 is indicated by $t_{CPUWAKETIME3}$.

While the bleep is sounding (time $t_2$ to $t_5$), the processor must be awake to generate the audio data (which is outputted to the audio amplifier). In a power saving mode, during the bleep 'space' period (time $t_5$ to $t_9$, with regard to Case 1) the processor may go back to sleep until the time ($t_8$) when it re-evaluates the signal input voltage and recomputes the bleep frequency and mark-to-space ratio as discussed elsewhere. During normal operation, however, the processor remains awake in order to control an LED (not shown), which typically has a longer activation time.

At time $t_9$ another audio pulse begins, for signal Case 1. At the later time $t_{10}$ the equivalent audio pulse begins for signal Case 2. Case 2, being a lower amplitude signal, corresponding to less vigorous movement or vibration, thus results in a slower sequence of bleeps.

The process for converting an input signal amplitude to a frequency will now be described.

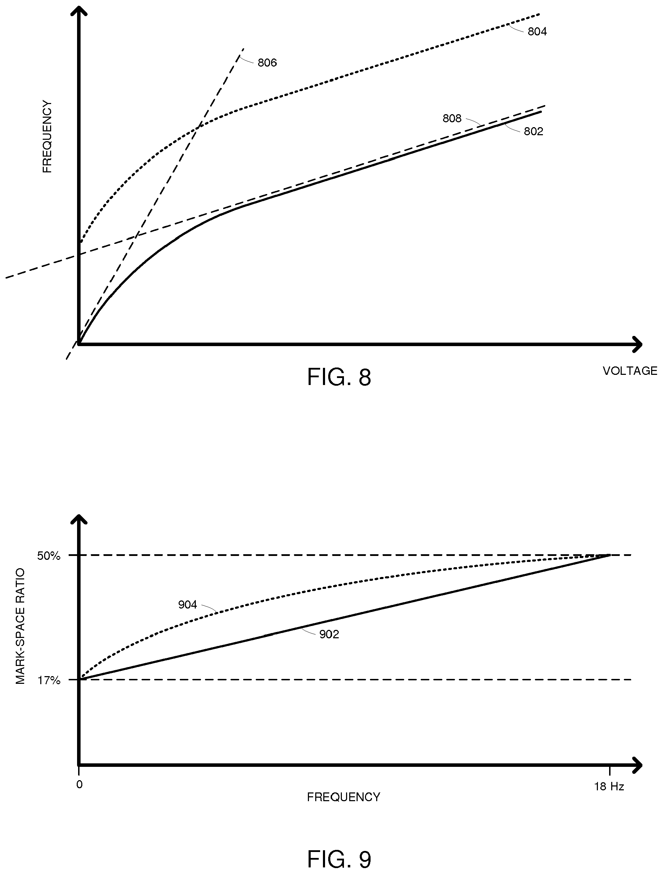

Figure 8 is a graph illustrating typical voltage-to-frequency transfer functions for the bite detector. A first transfer function 802 and second, offset, transfer function 804 are shown, but others are of course possible. The function 802 has a curve whereby at low voltages, representing small movements of a fishing line, a small change in voltage results in a large change in output frequency, following the gradient 806, and at higher voltages, the transfer function follows a shallower gradient 804. This transfer function mirrors a similar non-linear relationship between line velocity and the voltage induced at the piezoelectric sensor, such that the overall relationship between line movement and frequency is approximately linear, providing clearer feedback and easy manual discrimination between different line speeds. Any other essentially arbitrary transfer function between voltage and frequency may be implemented if desired.

Figure 9 is a graph illustrating the variation of mark-to-space ratios with repetition frequency for the above-mentioned bite detector. The relationship can be essentially linear 902 or essentially any arbitrary non-linear curve 904. At low frequencies of audio pulses, a small mark-to-space ratio (for example 17%) is desired, because the input signal is blanked during the audio tone and at low pulse frequencies the blocking time $t_{BLOCKLENGTH}$ becomes relatively long in duration, reducing the effectiveness of the detector. Additionally, when it is difficult to discriminate between similar pulse frequencies, variations in the mark-to-space ratio can provide another auditory cue to distinguish the signals.

In the case where a wireless device is used for monitoring and/or controlling the bite detector, two forms of control are possible. In the first, preferred, control scheme, each audio tone is transmitted individually, causing it to be output with immediate effect. In this case, the data packet transmitted to the wireless device at the start of each audio tone typically includes the following data:

Table 1: Data packet for individual audio tone control

| Data | Typical values |
| --- | --- |
| Tone length | time in ms |
| Pitch | frequency in Hz |
| Warble | TRUE / FALSE |

Essentially the bleep, tone and duration are transmitted, but different permutations are possible, as will be explained below. In the first control scheme, the receiving device will by default not transmit a tone, reducing radio traffic and avoiding disruption if the radio connection is lost. Each and every tone burst (bleep) is produced locally at the bite detector, and a radio message is sent to the remote (wireless) device for remote reproduction.

It is also possible, in either control scheme, to include a timing offset or delay. For example, if a radio command is issued at time $t_8$ (see above), an offset of $(t_9-t_8)$ might be specified as an additional parameter, so that the remote device begins the audio tone in sync with the bite detector (though such precise control may not normally be required).

In the second control scheme, the remote device is instructed to start emitting audio tones, and will continue to do so until a correction or a command to stop is issued. Less data is transmitted using this method, though it is more susceptible to errors (for example if a stop command is not received) and therefore not typically preferred. In this case, the data packet transmitted to the wireless device at the start of each audio tone typically includes the following data:

Table 2: Data packet for general audio tone control

| Data | Typical values |
| --- | --- |
| Tone length | time in ms |
| Tone period | time in ms |
| Pitch | frequency in Hz |
| Warble | TRUE / FALSE |

It will be appreciated that in the second control scheme, an estimate or computation is required of the period or frequency of the audio pulse train (they are of course interchangeable as and when appropriate). It will also be appreciated that these data packets represent a small amount of data relative to a representation of the actual waveform being output by the bite detector, and allows the reconstruction of the whole tone, rather than requiring the transmission of audio data in real-time, or similar. A similar process is possible with regard to lights (such as LEDs), vibrations and other appropriate alarm signals.

In another aspect of the present embodiment, the signal detection can be refined by detecting signal properties other than whether an amplitude threshold is exceeded, such as looking at average amplitudes or power, computing correlation or auto-correlation of signals, or looking at other statistical properties. Additional or alternative filtering stages can be provided, in addition, and the transfer function of the v to f converter and the mark-to-space ratio function can be adapted as necessary and appropriate.

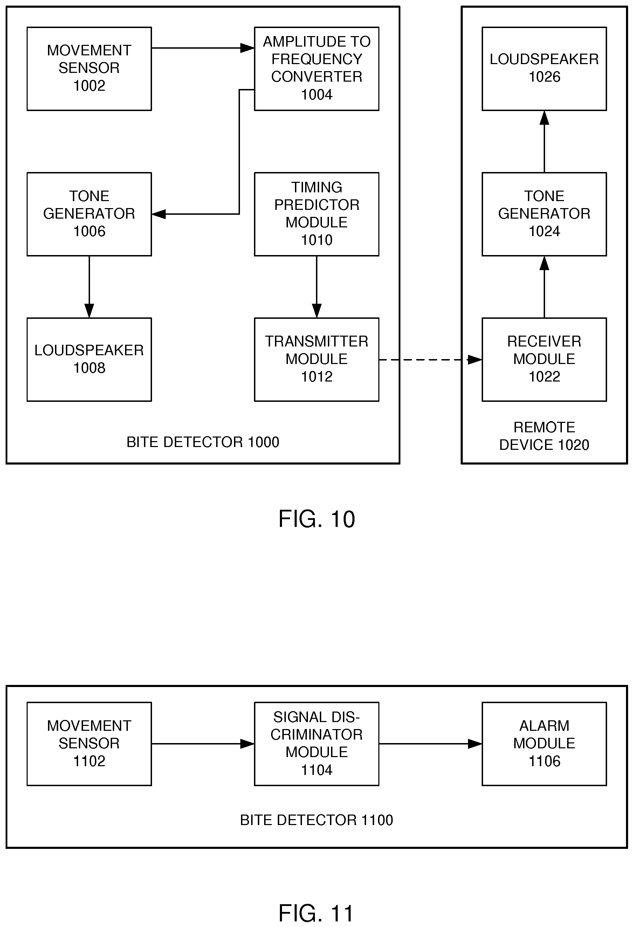

Figure 10 is a schematic overview of a first particular embodiment of the bite detector relating to timing parameter prediction. In this aspect, the bite detector 1000 in essence includes a movement sensor 1002, an amplitude to frequency converter 1004 (which may be implemented in hardware or software), a tone generator 1006 (likewise), and a loudspeaker 1008. The detector 1000 also includes a timing predictor module 1010 for determining (essentially) the duration and optionally the onset and period of each audio tone. As described above, this may be by reference to the virtual implementation of the v to f converter, or may be by reference to a virtual model of an analogue v to f converter being used in hardware, for example. A transmitter module 1012 transmits the properties determined by the predictor module 1010 to a remote device 1020, which includes a receiver module 1022, a tone generator 1024 for reconstructing the tones output at the detector, and a loudspeaker 1026.

Figure 11 is a schematic overview of a second particular embodiment of the bite detector relating to signal discrimination. As before a movement sensor 1102 outputs signals representing movements on the line. A signal discriminator module 1104 determines whether various criteria are met, such as whether a voltage threshold is exceeded for a particular length of time. If so, the signal is passed on to the alarm module 1106. In the present embodiment the signal discriminator module 1104 comprises both hardware and software elements, such that the processor is only woken when a rudimentary hardware check is passed. The processor implements then a more flexible discrimination, for example causing the processor to go back to sleep for a fixed (or variable) length of time depending on the current signal input.

Although the present invention has been described above with reference to specific embodiments, it will be apparent to a skilled person in the art that modifications lie within the scope of the present invention as set forth in the appended claims.

**Claims**

1. A bite detector (1100) for providing an alarm signal indicative of movement of the line of a fishing rod, the detector comprising

a movement sensor (1102) for generating a movement signal indicative of movement detected by the sensor;

an alarm module (1106) for processing the movement signal and generating the alarm signal if appropriate; and

a signal discriminator module (1104) for activating the alarm module when the movement signal has met at least one criterion for a length of time, the length of time being selectable from a range of lengths of time during operation, wherein the signal discrimination module (1104) includes a first stage, for determining if the movement signal has met at least one first criterion for a first length of time, and a second stage, for determining if the movement signal has met at least one second criterion for a second length of time consecutive to the first length of time.

2. A bite detector according to Claim 1, wherein the first stage is implemented by analogue circuitry.

3. A bite detector (1100) according to Claim 1 or 2, wherein the bite detector includes a processor for executing computer program code, and the first stage of the discriminator module (1104) is operable to activate the processor if the movement signal has met said at least one first criterion for a first length of time.

4. A bite detector (1100) according to Claim 3, wherein the second stage of the signal discrimination module (1104) comprises discriminator computer program code which, when executed by the processor, evaluates whether said at least one second criterion is met for the second length of time.

5. A bite detector (1100) according to Claim 4, wherein the discriminator computer program code causes the processor to enter a sleep mode for at least part of the second length of time.

6. A bite detector (1100) according to any one of Claims 3 to 5, wherein the alarm module (1106) includes alarm computer program code executable on the processor, and the second stage of the signal discrimination module (1104) causes execution of the alarm computer program code if said at least one second criterion is met for the second length of time.

7. A bite detector (1100) according to according to any preceding claim, wherein the first length of time is substantially fixed during operation of the bite detector.

8. A bite detector (1100) according to according to any preceding claim, wherein the second length of time is adjustable during operation of the bite detector.

9. A bite detector (1100) according to according to any preceding claim, wherein said at least one first criterion is whether the movement signal exceeds a first threshold for the first length of time, and said at least one second criterion is whether the movement signal exceeds a second threshold for the second length of time.

10. A bite detector (1100) according to any preceding claim, wherein the signal discriminator module (1104) further comprises a comparator (418).

11. A bite detector (1100) according to Claim 10, further comprising a signal delay module (416) for delaying the input to the comparator (418).

12. A bite detector (1100) according to Claim 1, wherein said at least one first criterion is whether the movement signal exceeds a first threshold for the first length of time, and said at least one second criterion is whether the movement signal exceeds a second threshold for the second length of time.

13. A bite detector (1100) according to any preceding claim, wherein the signal discriminator module includes an RC filter.

14. Computer program code which, when stored and executed on a processor within an appropriately configured bite detector (1100), causes the bite detector to operate as a bite detector as defined in Claim 3 or any one of Claims 4 to 11 and 13, when dependent on Claim 3.


**Patentansprüche**

1. Bissdetektor (1100) zum Bereitstellen eines Alarmsignals, das eine Bewegung der Schnur einer Angelrute anzeigt, wobei der Bissdetektor Folgendes umfasst:

einen Bewegungssensor (1102) zum Erzeugen eines Bewegungssignals, das eine Bewegung anzeigt, die durch den Sensor detektiert wird;

ein Alarmmodul (1106) zum Verarbeiten des Bewegungssignals und falls erforderlich Erzeugen des Alarmsignals; und

ein Signaldiskriminatormodul (1104) zum Aktivieren des Alarmmoduls, wenn das Bewegungssignal mindestens ein Kriterium über eine Zeitspanne erfüllt hat, wobei die Zeitspanne aus einem Bereich von Zeitspannen während des Betriebs auswählbar ist, wobei das Signalunterscheidungsmodul (1104) eine erste Stufe zum Bestimmen, ob das Bewegungssignal mindestens ein erstes Kriterium über eine erste Zeitspanne erfüllt hat, und eine zweite Stufe zum Bestimmen, ob das Bewegungssignal mindestens ein zweites Kriterium über eine zweite Zeitspanne, die auf die erste Zeitspanne folgt, erfüllt hat, einschließt.

2. Bissdetektor nach Anspruch 1, wobei die erste Stufe durch eine Analogschaltung implementiert wird.

3. Bissdetektor (1100) nach Anspruch 1 oder 2, wobei der Bissdetektor einen Prozessor zum Ausführen eines Computerprogrammcodes einschließt und die erste Stufe des Diskriminatormoduls (1104) wirksam ist, um den Prozessor zu aktivieren, falls das Bewegungssignal das mindestens eine erste Kriterium über eine erste Zeitspanne erfüllt hat.

4. Bissdetektor (1100) nach Anspruch 3, wobei die zweite Stufe des Signalunterscheidungsmoduls (1104) einen Diskriminatorcomputerprogrammcode umfasst, der, wenn er durch den Prozessor ausgeführt wird, beurteilt, ob das mindestens eine zweite Kriterium über die zweite Zeitspanne erfüllt ist.

5. Bissdetektor (1100) nach Anspruch 4, wobei der Diskriminatorcomputerprogrammcode den Prozessor dazu veranlasst, für mindestens einen Teil der zweiten Zeitspanne in einen Ruhemodus einzutreten.

6. Bissdetektor (1100) nach einem der Ansprüche 3 bis 5, wobei das Alarmmodul (1106) einen Alarmcomputerprogrammcode einschließt, der auf einem Prozessor ausführbar ist, und die zweite Stufe des Signalunterscheidungsmoduls (1104) eine Ausführung des Alarmcomputerprogrammcodes veranlasst, falls das mindestens eine zweite Kriterium über die zweite Zeitspanne erfüllt ist.

7. Bissdetektor (1100) nach einem der vorhergehenden Ansprüche, wobei die erste Zeitspanne im Wesentlichen während des Betriebs des Bissdetektors fest ist.

8. Bissdetektor (1100) nach einem der vorhergehenden Ansprüche, wobei die zweite Zeitspanne während des Betriebs des Bissdetektors regelbar ist.

9. Bissdetektor (1100) nach einem der vorhergehenden Ansprüche, wobei das mindestens eine erste Kriterium ist, ob das Bewegungssignal einen ersten Schwellenwert über die erste Zeitspanne überschreitet, und das mindestens eine zweite Kriterium ist, ob das Bewegungssignal einen zweiten Schwellenwert über die zweite Zeitspanne überschreitet.

10. Bissdetektor (1100) nach einem der vorhergehenden Ansprüche, wobei das Signaldiskriminatormodul (1104) ferner eine Vergleichsvorrichtung (418) umfasst.

11. Bissdetektor (1100) nach Anspruch 10, ferner umfassend ein Signalverzögerungsmodul (416) zum Verzögern der Eingabe an die Vergleichsvorrichtung (418).

12. Bissdetektor (1100) nach Anspruch 1, wobei das mindestens eine erste Kriterium ist, ob das Bewegungssignal einen ersten Schwellenwert über die erste Zeitspanne überschreitet, und das mindestens eine zweite Kriterium ist, ob das Bewegungssignal einen zweiten Schwellenwert über die zweite Zeitspanne überschreitet.

13. Bissdetektor (1100) nach einem der vorhergehenden Ansprüche, wobei das Signalunterscheidungsmodul einen RC-Filter einschließt.

14. Computerprogrammcode, der, wenn er auf einem Prozessor in einem angemessen konfigurierten Bissdetektor (1100) gespeichert und durch diesen ausgeführt wird, den Bissdetektor dazu veranlasst, als ein Bissdetektor nach Anspruch 3 oder einem der Ansprüche 4 bis 11 und 13, wenn von Anspruch 3 abhängig, zu arbeiten.

**EP 2 907 384 B1**

**Revendications**

1. Détecteur de touche (1100) destiné à délivrer un signal d'alarme indicateur de mouvement de la ligne d'une canne à pêche, le détecteur comprenant

   un capteur de mouvement (1102) destiné à générer un signal de mouvement indicateur de mouvement détecté par le capteur ;

   un module d'alarme (1106) destiné à traiter le signal de mouvement et à générer le signal d'alarme le cas échéant ; et

   un module de discrimination de signal (1104) destiné à activer le module d'alarme quand le signal de mouvement respecte au moins un critère pour une longueur de temps, la longueur de temps étant sélectionnable parmi une plage de longueurs de temps en cours d'utilisation,

   dans lequel le module de discrimination de signal (1104) inclut un premier niveau, destiné à déterminer si le signal de mouvement respecte au moins un premier critère pour une première longueur de temps, et un deuxième niveau, destiné à déterminer si le signal de mouvement respecte au moins un deuxième critère pour une deuxième longueur de temps consécutive à la première longueur de temps.

2. Détecteur de touche selon la revendication 1, dans lequel le premier niveau est mis en oeuvre par un circuit analogique.

3. Détecteur de touche (1100) selon la revendication 1 ou 2, dans lequel le détecteur de touche inclut un processeur destiné à exécuter un code de programme informatique, et le premier niveau du module de discrimination (1104) est utilisable pour activer le processeur si le signal de mouvement respecte ledit au moins un premier critère pour une première longueur de temps.

4. Détecteur de touche (1100) selon la revendication 3, dans lequel le deuxième niveau du module de discrimination de signal (1104) comprend un code de programme informatique discriminateur qui, lorsqu'il est exécuté par le processeur, évalue si ledit au moins un deuxième critère est respecté pour la deuxième longueur de temps.

5. Détecteur de touche (1100) selon la revendication 4, dans lequel le code de programme informatique discriminateur amène le processeur à entrer dans un mode de veille pendant au moins une partie de la deuxième longueur de temps.

6. Détecteur de touche (1100) selon l'une quelconque des revendications 3 à 5, dans lequel le module d'alarme (1106) inclut un code de programme informatique d'alarme exécutable sur le processeur, et le deuxième niveau du module de discrimination de signal (1104) amène l'exécution du code de programme informatique d'alarme si ledit au moins un deuxième critère est respecté pour la deuxième longueur de temps.

7. Détecteur de touche (1100) selon l'une quelconque des revendications précédentes, dans lequel la première longueur de temps est sensiblement fixe en cours d'utilisation du détecteur de touche.

8. Détecteur de touche (1100) selon l'une quelconque des revendications précédentes, dans lequel la deuxième longueur de temps est ajustable en cours d'utilisation du détecteur de touche.

9. Détecteur de touche (1100) selon l'une quelconque des revendications précédentes, dans lequel ledit au moins un premier critère est le dépassement ou le non-dépassement par le signal de mouvement d'un premier seuil pour la première longueur de temps, et ledit au moins un deuxième critère est le dépassement ou le non-dépassement par le signal de mouvement d'un deuxième seuil pour la deuxième longueur de temps.

10. Détecteur de touche (1100) selon l'une quelconque des revendications précédentes, dans lequel le module de discrimination de signal (1104) comprend en outre un comparateur (418).

11. Détecteur de touche (1100) selon la revendication 10, comprenant en outre un module de retardement de signal (416) destiné à retarder l'entrée au comparateur (418).

12. Détecteur de touche (1100) selon la revendication 1, dans lequel ledit au moins un premier critère est le dépassement ou le non-dépassement par le signal de mouvement d'un premier seuil pour la première longueur de temps, et ledit au moins un deuxième critère est le dépassement ou le non-dépassement par le signal de mouvement d'un deuxième seuil pour la deuxième longueur de temps.

13. Détecteur de touche (1100) selon l'une quelconque des revendications précédentes, dans lequel le module de discrimination de signal inclut un filtre RC.

**14.** Code de programme informatique qui, lorsqu'il est stocké et exécuté sur un processeur dans un détecteur de touche configuré de manière appropriée (1100), amène le détecteur de touche à fonctionner comme un détecteur de touche selon la revendication 3 ou l'une quelconque des revendications 4 à 11 et 13, lorsqu'elles dépendent de la revendication 3.

FIG. 1   PRIOR ART

PIEZO LINE SENSOR 102

USER-SET AMP GAIN 132

USER-SET RANGE SWITCH 134

SIGNAL LIMITER 104

LOW PASS FILTER 106

SIGNAL AMPLIFIER AND HP FILTER 108

SWITCHABLE RECTIFIER 110

RE-TRIGGERABLE MONOSTABLE 120

SIGNAL BLANKING 112

SIGNAL SMOOTHING 114

116

VOLTAGE TO FREQUENCY CONVERTER 118

USER-SET VOLUME 138

USER-SET TONE 136

PIEZO SPEAKER 130

AUDIO AMPLIFIER 128

TONE OSCILLATOR 126

ENABLE

ALTERNATE TONE CONTROLLER 124

CLK

RE-TRIGGERABLE MONOSTABLE 122

ALT

RST

FIG. 2A

FRONT VIEW

FIG. 2B

SIDE VIEW

FIG. 3

FIG. 4

FIG. 5

FIG. 6

FIG. 7

FIG. 8

FIG. 9

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2222060 A
- GB 2340016 A
- GB 2289604 A